# EUROPEAN PATENT APPLICATION

(11) **EP 1 936 862 A1**
(43) Date of publication of application: **25.06.2008**
(21) Application number: 06291985.7
(22) Date of filing: 18.12.2006
(51) Int. Cl.: H04L 12/12, H04L 12/28

(54) **Home network secure module for a homeplug network**

(71) Applicant: Alcatel Lucent, 75008 Paris (FR)
(72) Inventor: Justen, Pascal Marie Edouard Julien, 1150 Sint-Pieters-Woluwe (BE); Acke, Willem Jozef Amaat, 2820 Rijmenam (BE); Bouchat, Christele, 2060 Antwerp (BE); Bracke, Sylvie, 2050 Antwerp (BE)
(74) Representative: Reichl, Wolfgang

(57) **Abstract**

A Home Network Secure Module (HNSM) for coupling a Home Network Data Line (DLI) to an end-user device (DEVICE). This home network Secure Module prevents unauthorized usage of the device out of its home-network. The home network secure module includes a Security Gate (SG) to control and to encrypt the transmission of data between the home network data line and the device, as well as a Power Relay (PR) to control the transmission of power from a Home Network Power Line and this device. The operation of the power relay is controlled by a Home Network Encryption Key HNEK received from the security gate that stores this HNEK for controlling and encrypting the transmission of data.

## Description

The present invention relates to a Home Network Secure Module adapted to couple a Home Network Data Line to an end-user device, said home network secure module including a Security Gate adapted to control and to encrypt the transmission of data between said home network data line and said device.

Today, home-network-enabled end-user devices are massively introduced on the market. For instance, member companies of the HomePlug Powerline Alliance^{™} (ref. "http://www.homeplug.org/en/index.asp") have already started to build new end-user products (devices) that seamlessly connect to each other through the power outlets or Home-Plugs of the house. When looking deeper at the security aspects that this technology offers, it seems that most of the attention is focused around privacy in a shared medium (i.e. a private virtual home network).

However, home networks generally offer an opportunity for security being disregarded until now: 'locking' home appliances to the home network. For these devices, no hard authentication scheme is desirable although it is of considerable importance that such devices are asserted to operate inside the home-network space only. In other words, no common, pro-active and in-depth solution exists in order to prevent abusive usage out of the home-network.

Currently, only network access security is offered, i.e. controlling access of a device to a local home network, but not preventing the use of the device on another network. In "HomePlug" technology for instance, the user inputs the HomePlug network password on the device. This generates a shared "Network Encryption Key" NEK used for encrypted transmission in the logical private network. It does not prevent of moving the device on another network, and resetting the key to access this network.

An object of the present invention is to provide a Home Network Secure Module of the above known type, preferably to be used in a HomePlug network, but wherein unauthorized usage of devices out of this home-network is prevented.

According to the invention, this object is achieved due to the fact that said home network secure module further includes a Power Relay adapted to control the transmission of power from a Home Network Power Line to said device, and that the operation of said power relay is controlled by information received from said security gate.

In this way, expensive devices like plasma TV's, home cinema's, computers, ... are no longer exposed to burglary because an extra security level is provided for these devices physically located inside a particular home network.

Another characterizing embodiment of the present invention is that said security gate stores a Home Network Encryption Key HNEK for controlling and encrypting said transmission of data, and that said home network encryption key is used by said power relay for controlling said transmission of power.

The end-user can thus choose to disable normal operation of his device outside the boundaries of the home-network by means of an authentication on the network controlling the power feed to the device.

In a preferred characterizing embodiment of the present invention, said home network data line is coupled to a Home Gateway of a home network, and said home gateway is adapted to provide said home network encryption key to said security gate.

When the device is reset, e.g. after power outage, and a key was previously stored in the security gate, the device should be kept out of operation, e.g. no power to it, unless an unlock mechanism is triggered by the home-network via this key. The Home Network Encryption Key HNEK provided by the home gateway of the home network may thus unlock the device.

Also another characterizing embodiment of the present invention is that said home gateway is adapted to validate said home network encryption key HNEK of said security gate.

Yet another characterizing embodiment of the present invention is that said power relay is adapted to control an essential pathway of said device, such as power supply, a display or non-encrypted data.

Such an essential pathway is for instance constituted by a power-line, a display, any non-encrypted data-line, a network, etc...

Further characterizing embodiments of the present home network secure module are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

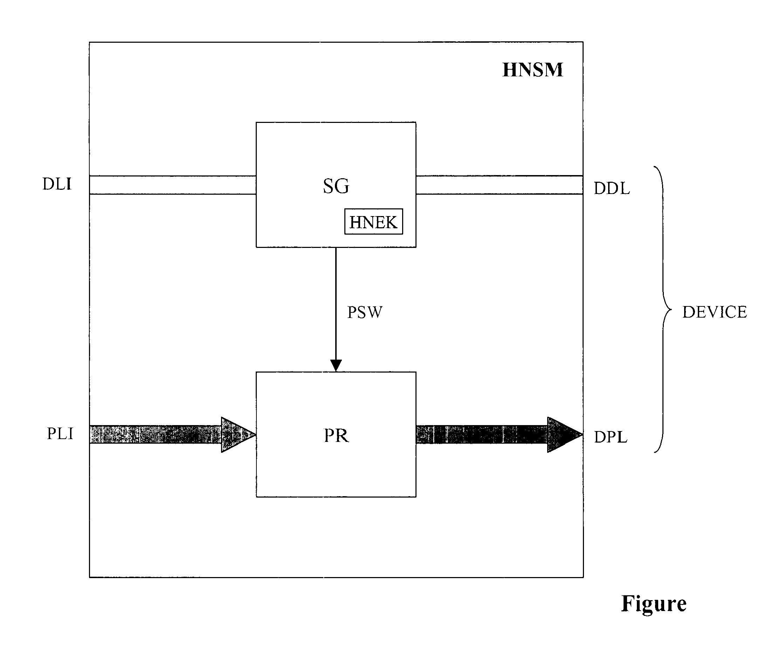

The above and other objects and features of the invention will become more apparent and the invention itself will be best understood by referring to the following description of an embodiment taken in conjunction with the accompanying drawings wherein the Figure represents a Home Network Secure Module according to the invention.

The Home Network Secure Module HNSM shown on the Figure is used to provide an extra security level for one or more end-user devices physically located inside a home network. An end-user can thereby choose to disable normal operation of his device outside the boundaries of the home-network. To this end, the home network secure module HNSM controls the power feed to the device, based on authentication on the network. Through encrypted authentication based on the original device key combined with a secret home-network key, i.e. device-password + home-network certificate, and to store it on the device. When the device is reset (e.g. after power outage) and a key was previously stored, it should be kept out of operation (i.e. no power to the unit) unless an unlock mechanism is triggered by the home-network via this key.

The home network secure module HNSM is coupled between a Home-Plug Line of the home network and at least one end-user device, labeled DEVICE. HNSM offers to home network devices an advanced feature of security by incorporating a home network identifier during encryption and to store it on the device.

Externally, the home network secure module HNSM has four interface points:
- at the home network side (from a power/data splitter): a Power Inlet PLI, and a Data Input Connection DLI carrying encrypted with a Home Network Encryption Key HNEK; and
- at the device side: a Controlled Power Outlet DPL, and the decrypted or transparent Data Output Connection DDL.

The home network secure module HNSM itself consists basically of two subcomponents:
- a Security Gate SG that handles the HNEK en-/de- cryption, HNEK key storage and verification The security gate SG is coupled to a Home Network Data Line of the home-plug line via the data input connection DLI and to the device via the data output connection DDL. The security gate SG controls and encrypts the transmission of data between the home-network data line and the device; and
- a Power Relay PR that opens or closes the power-line supply towards the device upon command of the Security Gate. The power relay PR is coupled to a Home Network Power Line of the home-plug line via the power inlet PLI and to the device via the controlled power outlet DPL. The power relay PR allows the transmission of power from the home-network power line to the device under control of information received from the security gate SG.

It is to be noted that the feature of the power relay PR can be generalized to control any essential pathway towards the device. This pathway can for instance be the power-line supply, as mentioned above, or any data-line for which no encryption is needed, such as a network line, or whereby no power relay may be needed, or a display, whereby the power relay plays the role of a data relay, etc.

The home network secure module HNSM operates in two modes:
- blocked mode: this is the state when the device is powered-up. No HNEK is stored yet or the HNEK received from the home-network mismatches with the HNEK stored in the security gate SG. The power relay PR interrupts the power outlet towards the device; or
- pass mode: the HNEK received from the home-network corresponds with the HNEK stored in the security gate SG. The power relay PR cross-connects the power-line to the device.

During blocked mode, the security gate SG waits for input for the HNEK that must be either stored, either validated with the HNEK stored previously. This can be achieved in following ways:
- manual input: the user enters the key manually on the device; or
- automated: the security gate SG initiates a discovery and authentication phase with a Home Gateway of the home network. It is the home gateway that will provide the device with the HNEK.

The home gateway can provide the device with the HNEK value in two ways:
- shared: this HNEK is based on the home-network id which should be related to the physical location of the home network or the home network administrator.
- private: the HNEK is a hashed key composed by the home-network id and a (random) generated value.

The home gateway should be able to import and export the generated HNEK towards a Home Service Manager for retrieval and storage purposes.

In a preferred embodiment, the home network secure module HNSM is sealed on the main motherboard (e.g. using an epoxy resin covering the chip and in/outlets) in order to prevent replacement or bypass, or is integrating in the central chip.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A Home Network Secure Module (HNSM) adapted to couple a Home Network Data Line to an end-user device (DEVICE), said home network secure module including a Security Gate (SG) adapted to control and to encrypt the transmission of data between said home network data line and said device,
***characterized in that*** said home network secure module (HNSM) further includes a Power Relay (PR) adapted to control the transmission of power from a Home Network Power Line to said device (DEVICE),
***and in that*** the operation of said power relay is controlled by information received from said security gate (SG).

2. The home network secure module (HNSM) according to claim **1**,
***characterized in that*** said security gate (SG) stores a Home Network Encryption Key HNEK for controlling and encrypting the transmission of data,
***and in that*** said home network encryption key is used by said power relay (PR) for controlling said transmission of power.

3. The home network secure module (HNSM) according to claim **2**,
***characterized in that*** said home network data line is coupled to a Home Gateway of a home network,
***and in that*** said home gateway is adapted to provide said home network encryption key HNEK to said security gate.

4. The home network secure module (HNSM) according to claim **3**,
***characterized in that*** said home gateway is adapted to validate said home network encryption key HNEK of said security gate (SG).

5. The home network secure module (HNSM) according to claim **3**,
***characterized in that*** said security gate (SG) is coupled to said home gateway via a home-plug line technology.

6. The home network secure module (HNSM) according to claim **3**,
***characterized in that*** said home network comprises a plurality of devices, each device being coupled to said home gateway via a distinct home network secure module (HNSM).

7. The home network secure module (HNSM) according to claim **1**,
***characterized in that*** said home network secure module (HNSM) is sealed on a main motherboard of said device.

8. The home network secure module (HNSM) according to claim **1**,
***characterized in that*** said power relay (PR) is adapted to control an essential pathway of said device.

9. The home network secure module (HNSM) according to claim **8**,
***characterized in that*** said essential pathway is constituted by a power supply.

10. The home network secure module (HNSM) according to claim **8**,
***characterized in that*** said essential pathway is constituted by a display.

11. The home network secure module (HNSM) according to claim **8**,
***characterized in that*** said essential pathway is constituted by a non-encrypted data.
